# EUROPEAN PATENT APPLICATION

(11) **EP 4 552 944 A1**
(43) Date of publication of application: **14.05.2025**
(21) Application number: 24211372.8
(22) Date of filing: 07.11.2024
(51) Int. Cl.: B62B 3/02, B62B 5/00

(54) **ELECTRIC CART EQUIPPED WITH A FOLDABLE AND HEIGHT ADJUSTABLE SHELF**

(30) Priority: 07.11.2023 BE 202305913
(71) Applicant: Maenhout nv, 8000 Brugge (BE)
(72) Inventor: Maenhout, Philippe, 8000 Brugge (BE)
(74) Representative: Brantsandpatents bv

(57) **Abstract**

The present invention relates to an electric cart, with a frame equipped with at least two motor-driven rear wheels powered by a rechargeable battery; a base carrier for supporting a first container, comprising a top and a bottom, equipped with at least one front wheel mounted via a wheel holder at the bottom of the base carrier, wherein the base carrier is connected to the frame; a hand frame, comprising at least two upright tubes connected by at least one transverse holder, wherein the at least two upright tubes are pivotably attached to the frame relative to the base carrier by means of a hinge; a mobile carrier for supporting a second container, comprising a fastening mechanism suitable for rotatably mounting the mobile carrier on the hand frame, wherein the base carrier is adjustable in height. The invention also relates to the use of the electric cart for transporting goods.

## Description

### TECHNICAL FIELD

The invention relates to an electric cart for general use, and more particularly to a rechargeable motorized personal shopping and utility cart.

The cart is primarily, but not exclusively, designed for elderly or weak consumers who find it difficult to pull or push a manual cart, especially on inclines, and propels itself on request.

### PRIOR ART

As strange as it may seem, the modern consumer economy, a shopping paradise of supermarkets, discount stores, and department stores, largely emerged from one invention: the shopping cart.

During the 1930s and 1940s, both cars and electric refrigerators became larger. As a result, families could buy, transport, and store more groceries at home. However, prior to the invention of the shopping cart, stores only offered customers wire baskets to pick up and carry their purchases, and these baskets had limited capacity. So, while shoppers had enough space in their cars and sufficient room in their refrigerators at home, the stores themselves limited the amount of their purchase. Sylvan Goodman, the founder of Piggly-Wiggly supermarkets, encountered this problem in the late 1930s and devised a shopping cart with two baskets, which evolved into the shopping carts we know today. With Goodman's invention, consumers could collect, purchase, and transport much larger volumes-and as a result, the stores themselves began to grow into the supermarkets and superstores we know today.

We may consider shopping carts as a convenience waiting for us at the supermarket, but for millions of consumers, particularly the elderly, apartment dwellers, and city residents, for example, using a personal wheeled aid or shopping cart is a personal convenience of daily life, even a necessity.

Typically, such carts are four-wheeled, lightweight, and upright, made of rubber-coated, sturdy steel wire. The carts are a cross between a traditional hand truck or dolly and a commercial shopping cart, and can be moved on all four wheels, in a horizontal direction, or only tilted and pulled or pushed on the rear wheels. With these carts, a person can transport much more cargo than they could carry in their hands alone, and a person can transport a load of groceries, for example, from an underground parking garage to a 10th-floor apartment, in one trip instead of having to return multiple times.

Yet, these personal aids or shopping carts have several significant drawbacks. The most important of these is the simple fact that they must be pushed or pulled and thus require an effort that exceeds the ability of many, especially the elderly, who rely on them.

Various attempts have been made to solve the aforementioned problems, such as those found in US Pat. No. 4,020,916 by Roy A. Noble; US Pat. No. 4,771,840 by Richard A. Keller; US Pat. No. 6,279,672 by Martine Losego. These documents are representative of self-propelled shopping carts.

None of the aforementioned inventions and patents, taken individually or in combination, describe the invention as claimed. There is thus a need for a reliable electronic shopping cart.

The electric cart propels itself on request and is designed for elderly or weak consumers who find it difficult to pull or push a manual cart, especially on inclines.

### SUMMARY OF THE INVENTION

In a first aspect, the present invention relates to an electric cart according to claim 1. Preferred embodiments of the electric cart are presented in claims 2 to 14.

In view of the aforementioned disadvantages inherent in the known shopping cart technology, the present invention provides a new electronic cart.

The general objective of the present invention, which will be described in more detail hereafter, is to provide a rechargeable, motorized personal cart. This cart is primarily, but not exclusively, designed for elderly or weak consumers who find it difficult to pull or push a manual cart, particularly on inclines, where the electric cart propels itself on request.

The assembly that defines the present invention is a base frame with an integrated base carrier on which a container fits, complemented by a mobile carrier that is adjustable in height and on which a container can also be placed.

The present invention offers several significant advantages that greatly improve the use of carts for transporting containers. Firstly, this invention significantly reduces the effort required to propel the cart forward, thereby partially or even completely eliminating the effort for this maneuver. This contributes to a more efficient and less tiring use of the electric cart. Moreover, this invention is distinguished by the cart's ability to move both straight and sideways. This increases flexibility in the transport process, allowing the cart to maneuver easily in various situations and directions. Another advantage of the invention is its suitability for standard containers, ensuring versatility and compatibility with existing container systems. Additionally, this innovation allows for the simultaneous placement of containers on both the base and mobile carrier, maximizing the efficiency of the transport process. The mobility of the carrier is further enhanced by its height adjustability, allowing adjustments based on the specific requirements of the transport. Furthermore, the containers are easily removable, making loading and unloading efficient and convenient.

In a second aspect, the invention relates to a use according to claim 15.

### DESCRIPTION OF THE FIGURES

The figures accompanying the written portion of this specification illustrate an embodiment of the present invention, an electronic cart, constructed and operating according to the teachings of the present invention.
Fig. 1 shows a perspective view illustrating an electric cart according to an embodiment of the present invention in an open folded state equipped with a mobile carrier positioned in the highest position.
Fig. 2 shows a perspective view illustrating an electric cart according to an embodiment of the present invention in an open folded state equipped with a mobile carrier positioned in the middle position.
Fig. 3 shows a perspective view illustrating an electric cart according to an embodiment of the present invention in a folded state equipped with a mobile carrier positioned in the highest position.
Fig. 4 shows a perspective view illustrating an electric cart according to an embodiment of the present invention in an open folded state equipped with a mobile carrier positioned in the highest position on which containers are placed on both carriers.

The various embodiments of the present invention will hereinafter be described in conjunction with the appended drawings, wherein like designations denote like elements.

### DETAILED DESCRIPTION

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term 'about' or 'around' is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to an electric cart. The electric cart is designed to transport goods in an efficient and easy manner. The invention is particularly useful in situations where it is necessary to transport heavy loads, such as in warehouses, factories, or other industrial environments. However, the electric cart according to the invention is not limited to such applications and can be used in any suitable environment.

In view of the aforementioned disadvantages inherent in the known shopping cart technology, the present invention provides a new electronic cart.

The general objective of the present invention, which will be described in more detail hereafter, is to provide a rechargeable motorized personal utility cart. Designed primarily, but not exclusively, for elderly or weak consumers who find it difficult to pull or push a manual cart, particularly on inclines, the electric cart propels itself on request.

The assembly that defines the present invention is a base frame or frame with an integrated base carrier on which a container fits, complemented by a mobile carrier that is adjustable in height and on which a container can also be placed.

According to a preferred embodiment, the electric cart includes a frame, equipped with at least two motor-driven rear wheels powered by a rechargeable battery.

According to a preferred embodiment, the electric cart includes a base carrier for supporting a first container, comprising a top and a bottom, equipped with at least one front wheel mounted via a wheel holder at the bottom of the base carrier, wherein the base carrier is connected to the frame.

According to a preferred embodiment, the electric cart includes a hand frame, comprising at least two upright tubes connected by at least one transverse holder, wherein the at least two upright tubes are pivotably attached to the frame relative to the base carrier by means of a hinge.

According to a further or alternative embodiment, the hand frame is provided with telescopic arms allowing the frame to be adjusted in size. This allows the frame to take on different dimensions, making the cart suitable for people of different sizes, but it can also be adjusted to different types of luggage or containers that can be moved.

According to a further or alternative embodiment, the electric cart is equipped with various control elements such as a braking system, a console in combination with a control element to electronically accelerate or decelerate the cart or even steer it in a specific direction, including forwards or backwards.

According to a preferred embodiment, the electric cart includes a mobile carrier for supporting a second container, comprising a fastening mechanism suitable for rotatably mounting the mobile carrier on the hand frame, wherein the base carrier is adjustable in height.

According to a preferred embodiment, the electric cart includes a frame, equipped with at least two motor-driven rear wheels powered by a rechargeable battery; a base carrier for supporting a first container, comprising a top and a bottom, equipped with at least one front wheel mounted via a wheel holder at the bottom of the base carrier, wherein the base carrier is connected to the frame; a hand frame, comprising at least two upright tubes connected by at least one transverse holder, wherein the at least two upright tubes are pivotably attached to the frame relative to the base carrier by means of a hinge; a mobile carrier for supporting a second container, comprising a fastening mechanism suitable for rotatably mounting the mobile carrier on the hand frame, wherein the base carrier is adjustable in height. According to a further preferred embodiment, the mobile carrier, the hand frame, and the base carrier are rotatable between an unfolded position, wherein in the unfolded position the mobile carrier is positioned at an angle of at least 70° and at most 110°, preferably at least 75° and at most 105°, more preferably at least 80° and at most 100°, even more preferably at least 85° and at most 95°, even more preferably at least 86° and at most 94°, even more preferably at least 87° and at most 93°, even more preferably at least 88° and at most 92°, even more preferably at least 89° and at most 91° relative to the hand frame and the mobile carrier and the base carrier are positioned parallel above each other, and a folded position, wherein in the folded position the mobile carrier is clamped between the base carrier and the hand frame.

According to a preferred embodiment, the electric cart includes a frame, equipped with at least two motor-driven rear wheels powered by a rechargeable battery; a base carrier for supporting a first container, comprising a top and a bottom, equipped with at least one front wheel mounted via a wheel holder at the bottom of the base carrier, wherein the base carrier is connected to the frame; a hand frame, comprising at least two upright tubes connected by at least one transverse holder, wherein the at least two upright tubes are pivotably attached to the frame relative to the base carrier by means of a hinge; a mobile carrier for supporting a second container, comprising a fastening mechanism suitable for rotatably mounting the mobile carrier on the hand frame, wherein the base carrier is adjustable in height; wherein the mobile carrier, the hand frame, and the base carrier are rotatable between an unfolded position, wherein in the unfolded position the mobile carrier is positioned at an angle of at least 70° and at most 110° relative to the hand frame and the mobile carrier and the base carrier are positioned parallel above each other, and a folded position, wherein in the folded position the mobile carrier is clamped between the base carrier and the hand frame.

According to a preferred embodiment, the mobile carrier and the base carrier will extend along the same side of the frame, preferably be similar in shape, and comprise a rectangular form. This allows for efficient use of space and facilitates the loading and unloading of the containers.

According to a preferred embodiment, the at least two rear wheels are rotatable over at least 90° relative to an axis perpendicular to a bottom of the frame, allowing the electric cart to be moved in at least two directions, wherein the electric cart is equipped with a control system for regulating and controlling said movement.

According to a preferred embodiment, the control system includes a console for operating the control system, which console is mounted on the hand frame, wherein the console is equipped with one or more physical buttons, a touchscreen, or a combination of both, and includes at least an on/off switch, a speed controller, and a forward/reverse controller for activating and regulating the motor.

According to a preferred embodiment, the fastening mechanism of the mobile carrier includes at least two holder rods, which are suitable for supporting the mobile carrier, wherein the holder rods are mounted in the unfolded position to the mobile carrier and provided on the transverse holder of the hand frame.

According to a preferred embodiment, the electric cart is equipped with a clamping system provided on the mobile carrier, the hand frame, the base carrier, or a combination thereof for clamping the holder rods to the mobile carrier and clamping the hand frame and the mobile carrier to the base carrier in the folded position.

According to a further or alternative embodiment, the carriers, both the mobile carrier and the base carrier, are equipped with a clamping system that clamps the containers when placing them on the carriers.

According to a further or alternative embodiment, the clamping system includes at least one carrier clamp suitable for clamping the mobile carrier against the hand frame in the folded position, wherein the carrier clamp is provided on the mobile carrier.

According to a further or alternative embodiment, the clamping system includes at least one frame clamp suitable for clamping the hand frame against the base carrier in the folded position, wherein the frame clamp is provided on the top of the base carrier.

According to a further or alternative embodiment, the clamping system includes at least one holder rod clamp suitable for clamping the holder rods in the folded position, wherein the holder rod clamp is provided on the mobile carrier, preferably on a side of the mobile carrier.

According to a preferred embodiment, in the folded position, the holder rods of the mobile carrier are detached from the transverse holder of the hand frame, wherein a bottom of the mobile carrier lies against the hand frame, wherein the hand frame is tiltable over the hinge towards the base carrier, wherein a top of the mobile carrier lies on the top of the base carrier.

According to a preferred embodiment, a total height of the electric cart in the folded position is no more than 40%, preferably no more than 35%, more preferably no more than 30%, even more preferably no more than 25%, even more preferably no more than 20%, even more preferably no more than 15%, even more preferably no more than 10%, of a total height in the unfolded position.

According to a preferred embodiment, the mobile carrier includes a length that is smaller than a length of the hand frame.

According to a preferred embodiment, the frame includes a locking mechanism, wherein the locking mechanism includes a footplate, a spring, and an unlocking rod suitable for blocking and unblocking the hand frame relative to the frame; wherein in the unfolded position the unlocking rod is suitable to move between a first and a second position, wherein the spring is suitable to guide the unlocking rod to the first position, wherein in the first position the unlocking rod blocks the hinge, thereby non-rotatably connecting the hand frame to the frame, and wherein in the second position the unlocking rod does not block the hinge, thereby rotatably connecting the hand frame to the frame; wherein the footplate is movably provided relative to the frame between a third and a fourth position, wherein the footplate, when moving from the third to the fourth position, actuates the unlocking rod to the second position.

According to a preferred embodiment, the electric cart is equipped with an autonomous system that uses GPS localization, image recognition, and sensors for autonomous movement of the electric cart.

According to a possible embodiment, the mobile carrier is attached to the hand frame by means of a foldable and detachable fastening mechanism. The device provided on the hand frame that allows the mobile carrier to be adjusted in height can be a combination of various transverse holders on which the mobile carrier and the holder rods can be clamped or a device with guides and a blocking system on which a combination of mobile carrier and holder rods can be attached. In the latter system, it is possible for the mobile carrier to be adjusted in height continuously between the maximum and minimum position.

According to a further or alternative embodiment, the electric cart is equipped with at least 3, preferably at least 4 wheels, of which the rear wheels, larger in diameter, are electrically driven on the axle via a central (tube) motor and two smaller, fully rotating bullet-shaped/spherical caster wheels at the front. Here, the possibility is provided that the rear wheels are rotatably arranged, allowing the electric cart to also be moved sideways.

According to a further or alternative embodiment, the electric cart is equipped with at least 3, preferably at least 4 wheels, of which the rear wheels, larger in diameter, are electrically driven on the axle via a motor on the wheel itself (and two smaller, fully rotating bullet-shaped/spherical caster wheels at the front). Here, the possibility is provided that the rear wheels are rotatably arranged, allowing the electric cart to also be moved sideways.

According to a further or alternative embodiment, the electric cart is equipped with an autonomous system allowing the cart to autonomously follow its operator or autonomously move from point A to point B using known systems such as GPS localization, image recognition, sensors mounted on the cart and connected to the control element. The control of the cart may possibly be supported with an app.

The present invention has significant improvements over known electronic shopping carts. To summarize the invention, certain aspects, advantages, and new features of the invention have been described herein.

Key advantages of the present invention:
- the effort of propelling the cart forward is partially or even completely eliminated
- the cart can move both straight and sideways
- is suitable for standard containers
- containers can be placed simultaneously on the base and mobile carrier
- the mobile carrier is adjustable in height; and
- the containers are removable.

It should be understood that not necessarily all such advantages can be achieved in accordance with a particular embodiment of the invention. Thus, the invention can be embodied or carried out in a way that achieves or optimizes one advantage or group of advantages as taught herein without necessarily achieving other advantages as taught or suggested herein. The features of the invention believed to be novel are particularly set forth and distinctly claimed in the concluding portion of the description. These and other features, aspects, and advantages of the present invention will be better understood with reference to the following drawings and detailed description.

In a second aspect, the invention relates to a use of the electric cart for transporting goods.

In what follows, the invention will be described by way of non-limiting examples illustrating the invention, and which are not intended to and should not be interpreted as limiting the scope of the invention.

### DESCRIPTION OF THE DRAWINGS

As discussed above, the various embodiments of the present invention relate to an electric cart 1 and more particularly to an electronically controlled cart 1 that can also serve as a shopping cart 1. The cart 1 is designed for elderly or weak consumers who find it difficult to pull or push a manual cart 1, particularly on inclines, and can propel itself on request. The construction of the device is designed in all respects for ultimate convenience and modularity.

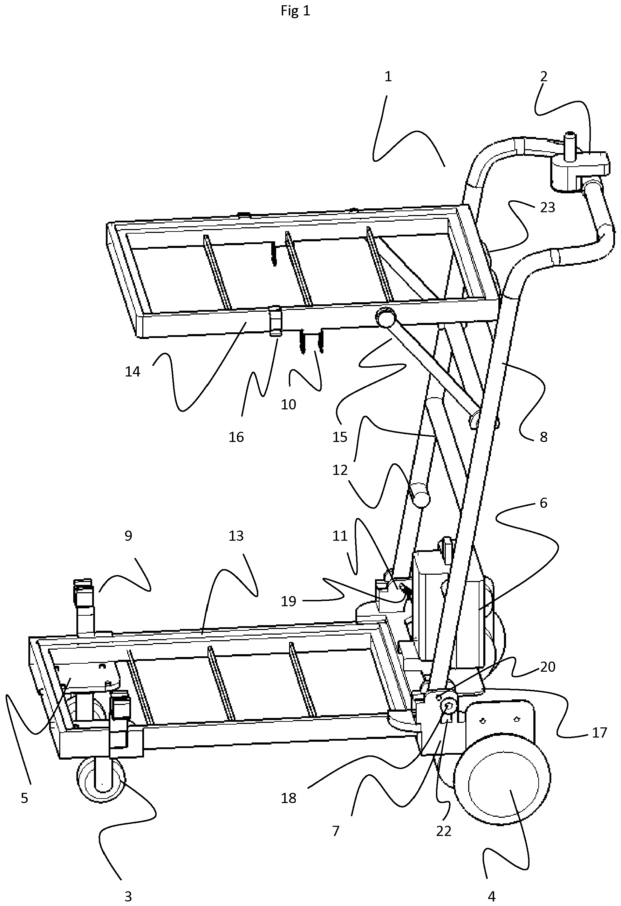

Fig. 1 shows a perspective view of the electric cart 1 according to a preferred embodiment of the present invention, where the wheels 3 are rotatably arranged relative to the frame or the base carrier. It is equipped with a console 2 for controlling the electrical section and the brakes. In this setup, the wheels 3 are rotatably arranged relative to the frame or the base carrier and are held by the wheel holders 5.

The frame 7 is equipped with a base carrier 13 on which the wheel holders 5 are provided at the front, with the wheels 3 mounted on them. At the front on the side walls of the base carrier 13, frame clamps 9 are also provided on each side, and at the rear on the frame 7, the wheels with motors 4 are provided. At the level of the wheels with motors 4, the hinge 20 is also located around which the hand frame 8 can pivot. The hand frame 8 is blocked by an unlocking mechanism 11 consisting of a footplate 17, unlocking rod 18, and a spring 19. The unlocking rod 18 can move up or down through an opening 22 but is limited in its movement by the spring 19, which pulls the unlocking rod 18 upwards to block the underside of the hand frame 8. To unblock the hand frame 8, the footplate must be pushed down, causing the unlocking rod 18 to be pushed down as well and the spring 19 to be stretched. This allows the hand frame 8 to pivot freely around the hinge 20. The removable battery 6 is also mounted on the frame 7. The battery 6 is preferably mounted on the frame but can also be mounted on the hand frame 8, according to the user's needs. The hand frame 8 is provided with several holders 12 that serve as support for the mobile carrier 14. In Fig. 1, the mobile carrier 14 is in the highest position, clamped by means of the clamps 23 on the highest holder 12 and supported by the holder rod 15, which rests on the holder just below the previous holder 12. The mobile carrier 14 is also equipped with two holder rod clamps 16 and two carrier clamps 10. The handle section on the hand frame 8 is equipped with a console 2 for controlling the electrical section and the brakes. This control can be wireless if desired, for example, via a Bluetooth connection between the console 2 and the control of the wheels with motor 4.

The embodiment of the present invention as shown in Figures 1-4 is an embodiment where the mobile carrier 14 can be placed in four positions stepwise. The embodiment where stepwise operation is used can also be replaced by a stepless system where the mobile carrier 14 can be placed on a holder, and this holder can then be adjusted steplessly in height between a minimum and maximum position.

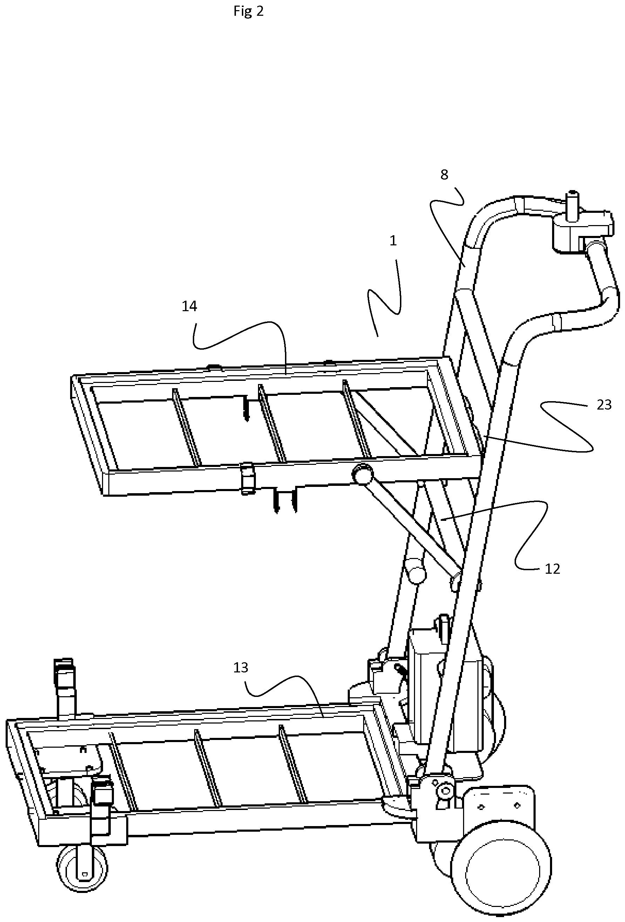

As shown in Figure 2, the mobile carrier 14 is positioned at the second highest position on the hand frame 8, bringing it closer to the mobile carrier 14.

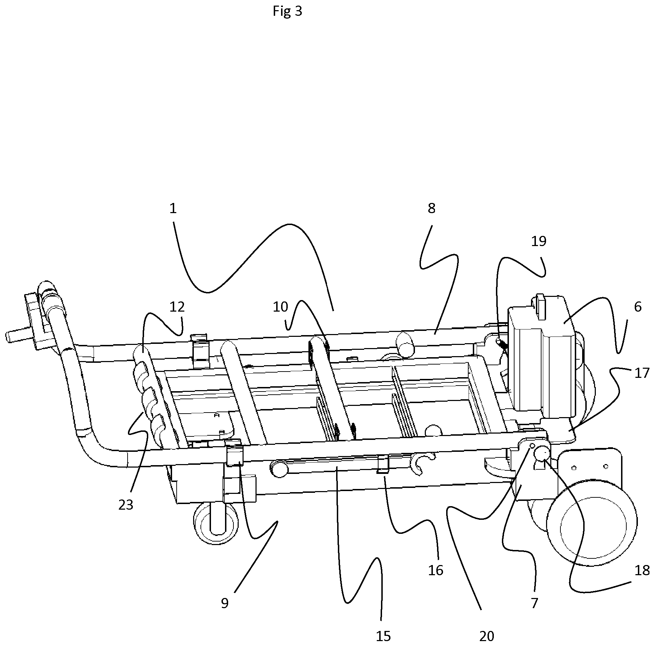

Figure 3 shows the electric cart 1 in a folded state, where the hand frame 8 is clamped in the frame clamps 9, and the rotatably arranged holder rods 15 are held by the holder rod clamps 16. The mobile carrier 14 is rotated at an angle of 90° around the clamps 23, which also clamp the mobile carrier 14 to the holder 12 at one place and at a second place by means of the carrier clamps 10, in which one of the holders of the mobile carrier 14 is firmly clamped. In this preferred embodiment, the battery 6 remains upright on the frame 7 and is thus easily accessible.

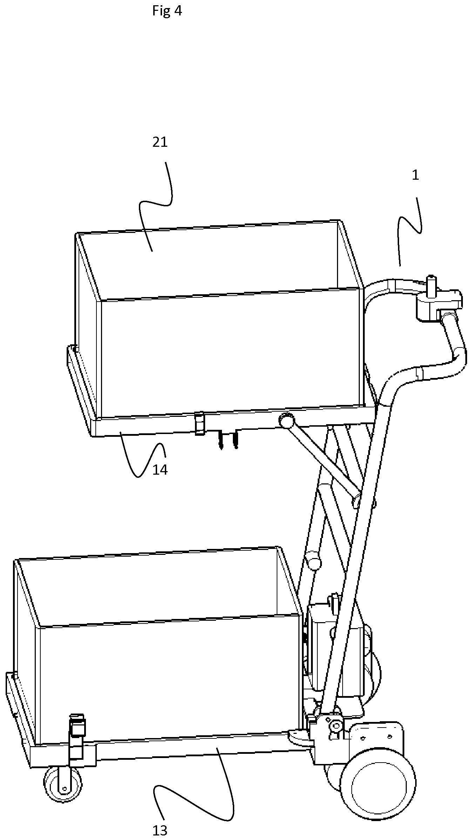

Fig. 4 shows a perspective view illustrating an electric cart 1 according to a preferred embodiment of the present invention, where the mobile carrier 14 is in the highest position, and both the base carrier 13 and the mobile carrier 14 are equipped with a container 21. This container 21 can be placed loosely but can also be clamped by defining the dimensions such that the containers 21 are clamped when placed and/or by means of an additional clamping mechanism.

Pa rts:
- 1 =: Electric cart: is the assembly of an electric cart according to the present invention
- 2 =: Console: this forms the control of the electric cart. This can make the cart move forward or backward, speed up or slow down, read the battery level, apply the brakes, etc. This console can be equipped with physical buttons, but also with a touchscreen or a combination of the aforementioned.
- 3 =: Wheels: are the wheels of the electric cart that allow it to be moved
- 4 =: Wheels with motor: the wheels of the electric cart are equipped with an electric motor that allows it to be moved.
- 5 =: Wheel holder: this serves as a holder for the wheels
- 6 =: Battery: this is a rechargeable and replaceable battery to power the electric motor and possibly also the console.
- 7 =: Frame: this is the frame of the electric cart on which all parts are mounted
- 8 =: Hand frame: this serves as a frame that connects a handle for use to the frame, so that the cart can be moved manually
- 9 =: Frame clamp: blocks the hand frame in folded position
- 10 =: Carrier clamp: blocks the mobile carrier when folding the mobile carrier against the hand frame
- 11 =: Locking mechanism: blocks the hand frame in the folded position. Can be unlocked to allow the hand frame to pivot allowing the electric cart to fold
- 12 =: Holder: are the supports on which the holder rod can be placed which in turn supports the mobile carrier
- 13 =: Base carrier: this is a part of the frame on which a container can be placed
- 14 =: Mobile carrier: this is a detachable frame on which a container can be placed and is adjustable in height.
- 15 =: Holder rod: supports the mobile carrier
- 16 =: Holder rod clamp: clamps the holder rod in folded position
- 17 =: Footplate: this allows the hand frame to be unlocked
- 18 =: Unlocking rod: is part of the mechanism to unlock the hand frame
- 19 =: Spring: is part of the mechanism to unlock the hand frame
- 20 =: Hinge: the pivot point on the hand frame around which the hand frame makes a tilting movement when folding the cart
- 21 =: Container: preferably a foldable box according to standard dimensions
- 22 =: Opening: this allows the unlocking rod to move vertically
- 23 =: Clamp: this is one or more clamps on the mobile carrier that allow the mobile carrier to be clamped to one of the holders and also allows the mobile holder to pivot around the holder

The embodiments of the invention described herein are illustrative, and numerous modifications, variations, and rearrangements can be readily contemplated to achieve substantially equivalent results, all of which are intended to be encompassed within the spirit and scope of the invention.

## Claims

1. An electric cart, comprising:
- a frame, equipped with at least two motor-driven rear wheels powered by a rechargeable battery;
- a base carrier for supporting a first container, comprising a top and a bottom, equipped with at least one front wheel mounted via a wheel holder at the bottom of the base carrier, wherein the base carrier is connected to the frame;
- a hand frame, comprising at least two upright tubes connected by at least one transverse holder, wherein the at least two upright tubes are pivotably attached to the frame relative to the base carrier by means of a hinge;
- a mobile carrier for supporting a second container, comprising a fastening mechanism suitable for rotatably mounting the mobile carrier on the hand frame, wherein the base carrier is adjustable in height;
wherein the mobile carrier, the hand frame, and the base carrier are rotatable between an unfolded position, wherein in the unfolded position the mobile carrier is positioned at an angle of at least 70° and at most 110° relative to the hand frame and the mobile carrier and the base carrier are positioned parallel above each other, and a folded position, wherein in the folded position the mobile carrier is clamped between the base carrier and the hand frame.

2. The electric cart according to claim 1, wherein the mobile carrier and the base carrier extend along the same side of the frame, preferably are similar in shape, and comprise a rectangular form.

3. The electric cart according to claim 1 or 2, wherein the at least two rear wheels are rotatable over at least 90° relative to an axis perpendicular to a bottom of the frame, allowing the electric cart to be moved in at least two directions, wherein the electric cart is equipped with a control system for regulating and controlling said movement.

4. The electric cart according to claim 3, wherein the control system includes a console for operating the control system, which console is mounted on the hand frame, wherein the console is equipped with one or more physical buttons, a touchscreen, or a combination of both, and includes at least an on/off switch, a speed controller, and a forward/reverse controller for activating and regulating the motor.

5. The electric cart according to any of the preceding claims 1 to 4, wherein the fastening mechanism of the mobile carrier comprises at least two holder rods, which are suitable for supporting the mobile carrier, wherein the holder rods are mounted in the unfolded position to the mobile carrier and provided on the transverse holder of the hand frame.

6. The electric cart according to any of the preceding claims 1 to 5, wherein the electric cart is equipped with a clamping system provided on the mobile carrier, the hand frame, the base carrier, or a combination thereof for clamping the holder rods to the mobile carrier and clamping the hand frame and the mobile carrier to the base carrier in the folded position.

7. The electric cart according to any of the preceding claims 6, wherein the clamping system comprises at least one carrier clamp suitable for clamping the mobile carrier against the hand frame in the folded position, wherein the carrier clamp is provided on the mobile carrier.

8. The electric cart according to any of the preceding claims 6 or 7, wherein the clamping system comprises at least one frame clamp suitable for clamping the hand frame against the base carrier in the folded position, wherein the frame clamp is provided on the top of the base carrier.

9. The electric cart according to any of the preceding claims 5 to 8, wherein the clamping system comprises at least one holder rod clamp suitable for clamping the holder rods in the folded position, wherein the holder rod clamp is provided on the mobile carrier, preferably on a side of the mobile carrier.

10. The electric cart according to any of the preceding claims 1 to 9, wherein in the folded position the holder rods of the mobile carrier are detached from the transverse holder of the hand frame, wherein a bottom of the mobile carrier lies against the hand frame, wherein the hand frame is tiltable over the hinge towards the base carrier, wherein a top of the mobile carrier lies on the top of the base carrier.

11. The electric cart according to any of the preceding claims 1 to 10, wherein a total height of the electric cart in the folded position is no more than 40% of a total height in the unfolded position.

12. The electric cart according to any of the preceding claims 1 to 11, wherein the mobile carrier comprises a length that is smaller than a length of the hand frame.

13. The electric cart according to any of the preceding claims 1 to 12, wherein the frame includes a locking mechanism, wherein the locking mechanism includes a footplate, a spring, and an unlocking rod suitable for blocking and unblocking the hand frame relative to the frame;
wherein in the unfolded position the unlocking rod is suitable to move between a first and a second position, wherein the spring is suitable to guide the unlocking rod to the first position, wherein in the first position the unlocking rod blocks the hinge, thereby non-rotatably connecting the hand frame to the frame, and wherein in the second position the unlocking rod does not block the hinge, thereby rotatably connecting the hand frame to the frame,
wherein the footplate is movably provided relative to the frame between a third and a fourth position, wherein the footplate, when moving from the third to the fourth position, actuates the unlocking rod to the second position.

14. The electric cart according to any of the preceding claims 1 to 13, wherein the electric cart is equipped with an autonomous system that uses GPS localization, image recognition, and sensors for autonomous movement of the electric cart.

15. Use of the electric cart according to any of the preceding claims 1 to 14 for transporting goods.
